# EUROPÄISCHE PATENTSCHRIFT

(11) **EP 2 917 799 B1**
(45) Veröffentlichungstag und Bekanntmachung des Hinweises auf die Patenterteilung: **23.05.2018**
(21) Anmeldenummer: 13789284.0
(22) Anmeldetag: 08.11.2013
(51) Int. Cl.: G05D 17/02, B25B 23/142, B25B 23/147

(54) **VERFAHREN ZUR STEUERUNG EINES DREHSCHRAUBERS SOWIE DREHSCHRAUBER**
METHOD FOR CONTROLLING A SCREWDRIVER AND SCREWDRIVER
PROCÉDÉ DE COMMANDE D'UNE VISSEUSE ET VISSEUSE

(30) Priorität: 09.11.2012 DE 102012220482
(43) Veröffentlichungstag der Anmeldung: 16.09.2015
(73) Patentinhaber: Wagner Vermögensverwaltungs-GmbH & Co. KG, 53804 Much (DE)
(72) Erfinder: ANDRES, Günter, 53804 Much Marienfeld (DE); NEISS, Günter, 53347 Alfter (DE); ZIMMER, Andreas, 53844 Troisdorf (DE); LINSEL, Bernd, 57080 Siegen (DE); BOZEK, Daniel, 53819 Neunkirchen-Seelscheid (DE)
(74) Vertreter: dompatent von Kreisler Selting Werner - Partnerschaft von Patent- und Rechtsanwälten mbB
(86) Internationale Anmeldenummer: PCT/EP2013/073340
(87) Internationale Veröffentlichungsnummer: WO 2014/072450

(56) Entgegenhaltungen:
- EP-A1- 0 422 388
- EP-B1- 0 721 695
- DE-A1-102007 055 718
- DE-C1- 3 500 714

## Beschreibung

Die Erfindung betrifft ein Verfahren zur Steuerung eines einen Elektromotor aufweisenden Drehschraubers sowie einen Drehschrauber mit Elektromotor.

Drehschrauber mit elektrischem Antrieb weisen einen Antriebsteil mit einem Elektromotor und einen Abtriebsteil auf. Der Antriebsteil ist mechanisch mit dem Abtriebsteil, beispielsweise über ein Getriebe, verbunden. Der Abtriebsteil weist üblicherweise einen im Querschnitt quadratischen Wellenstutzen auf, auf den beispielsweise eine Schlüsselnuss aufsteckbar ist.

Es sind Drehschrauber mit Elektromotoren bekannt, bei denen die drehmomentbezogene Abschaltung bei Erreichen eines vorgewählten Drehmomentes mittels des vom Motor aufgenommenen Stroms erfolgt. Dabei wird über ein Stellglied der Sollwert des Stroms voreingestellt. Beim Verschraubungsvorgang wird nach Abschluss der Anlaufphase der Strom kontinuierlich gemessen, wobei, sobald der vorgewählte Sollwert für den Strom erreicht oder überschritten wird, durch die Steuerung die weitere Stromzufuhr unterbrochen und somit der Drehschrauber abgeschaltet wird.

Bei der Verwendung einer Steuerung, die die Messgröße "Strom" verwendet, können Probleme oder Ungenauigkeiten auftreten, da der Strom gleichzeitig die Regelgröße einer möglichen Drehzahlbegrenzung oder Drehzahlregelung ist. Stromänderungen aufgrund der Änderungen dieser Regelgröße führen somit zu Störungen der Messgröße der Drehmomentsteuerung. Darüber hinaus läuft der Strom im Elektromotor über einen Kommutator, welcher erhebliche Stromschwankungen verursacht, die nur über eine entsprechende Glättung der Messwerte ausgeglichen werden können. Dies führt zu einer verzögerten Auswertung der relevanten Stromänderungen bei der Steuerung.

Um eine Steuerung über die Kenngröße Strom durchzuführen, muss in der Steuerung eine zuvor ermittelte Motorkennlinie hinterlegt sein. Die tatsächliche Kennlinie im Betrieb kann jedoch beispielsweise aufgrund der Stellung des Ankers zum Feld oder aufgrund des durch den Kommutator verursachten Widerstandes in der Stromführung, der von Fertigungstoleranzen, Abnutzung der Kohlen sowie mechanischen Positionsänderungen der Kohlen beeinflusst werden kann, abweichen. Um diese Abweichung zu berücksichtigen, müssten zusätzliche, sehr aufwändige Sensoren vorgesehen sein.

Schließlich erfolgt eine Abschaltung bei dem zu erreichenden Drehmoment mittels einer derartigen Steuerung häufig bei relativ hohen Drehzahlen, so dass die hohe kinetische Restenergie unkontrolliert zu einem weiteren Drehmomentanstieg führt, was eine weitere Ungenauigkeit darstellt.

Aus der DE 35 00 714 ist es bekannt, einen Drehschrauber zu steuern, indem die Motorbetriebsspannung eingestellt wird, so dass der Motor auf unterschiedlichen Motorkennlinien betrieben werden kann. Diesem Drehschrauber liegt die Erkenntnis zugrunde, dass von dem Elektromotor das größte Drehmoment kurz vor dem Stillstand des Elektromotors erzeugt wird. Es wird daher eine Motorkennlinie gewählt, bei der das beim Stillstand des Elektromotors erreichbare Drehmoment dem gewünschten Drehmoment entspricht und der Elektromotor wird mit der dieser Kennlinie zugrundeliegenden Motorbetriebsspannung betrieben.

Ein derartiges Verfahren kann jedoch zu Problemen führen, da bei jeder Abschaltung der Motor bis zum Stillstand betrieben wird und somit einem Kurzschlussstrom ausgesetzt wird. Dies kann zur Beschädigung des Motors führen bzw. es müssen spezielle Motoren gewählt werden, die eine derartige Betriebsweise zulassen. Das mit dem vorbekannten Drehschrauber einstellbare minimale Abschaltdrehmoment ist nach unten hin begrenzt, da eine Mindestbetriebsspannung vorliegen muss, um den Elektromotor zu betreiben. Das bei dieser Mindestbetriebsspannung bei dem Motorstillstand erreichbare Drehmoment ist daher das minimal einstellbare Abschaltdrehmoment.

EP 0 721 695 B1 offenbart eine Regelung für einen Elektromotor, bei der die Differenz zwischen einer Soll-Drehzahl und einer Ist-Drehzahl gebildet und aus der Drehzahldifferenz auf das Drehmoment geschlossen wird.

Es ist daher die Aufgabe der vorliegenden Erfindung, ein Verfahren zur Steuerung eines Drehschraubers sowie einen Drehschrauber zur Verfügung zu stellen, bei dem unter Vermeidung der Nachteile des Standes der Technik ein Abschaltdrehmoment auf flexible Weise einstellbar ist, wobei gleichzeitig vermieden wird, dass der Motor in den Bereich des Kurzschlussstroms fährt.

Das erfindungsgemäße Verfahren ist definiert durch die Merkmale des Anspruchs 1. Der erfindungsgemäße Drehschrauber ist durch die Merkmale des Anspruchs 8 definiert.

Das erfindungsgemäße Verfahren sieht vor, dass zur Steuerung eines einen Elektromotor aufweisenden Drehschraubers, wobei der Elektromotor ein bei gegebener Effektivspannung eindeutiges Verhältnis von Drehzahl zu Drehmoment aufweist, folgende Schritte durchgeführt werden:
- Vorgeben einer Effektivspannung zum Betrieb des Elektromotors,
- Vorgeben einer bei der vorgegebenen Effektivspannung einem vorbestimmten Abschaltdrehmoment entsprechenden Abschaltdrehzahl,
- Betreiben des Drehschraubers unter Last mit der vorgegebenen Effektivspannung,
   während des Betriebs des Drehschraubers:
   - Bestimmen der Drehzahl,
   - Abschalten des Elektromotors bei Erreichen der Abschaltdrehzahl.

Dem erfindungsgemäßen Verfahren liegt die Erkenntnis zugrunde, dass bei bestimmten Elektromotoren bei einer gegebenen Effektivspannung ein eindeutiges Verhältnis von Drehzahl zu Drehmoment vorliegt. Dies bedeutet, dass die bei der gegebenen Effektivspannung vorliegende Motorkennlinie stetig verläuft und zu jeder Drehzahl ein eindeutiger Drehmomentwert zugeordnet werden kann. Zum Erreichen eines gewünschten Abschaltdrehmomentes werden somit zwei Werte vorgegeben. Zunächst wird die Effektivspannung zum Betrieb des Elektromotors vorgegeben, wodurch eine Motorkennlinie ausgewählt wird. Anschließend wird die dem vorbestimmten Abschaltdrehmoment entsprechende Abschaltdrehzahl auf dieser Motorkennlinie bestimmt und vorgegeben. Während des Betriebs des Drehschraubers unter Last, d.h. dass der Drehschrauber auf einer zu drehenden Schraube aufgesetzt ist, wird kontinuierlich die Drehzahl, beispielsweise des Elektromotors, überprüft und beim Erreichen der zuvor bestimmten Abschaltdrehzahl wird der Elektromotor abgeschaltet.

Dadurch wird auf sehr einfache Art und Weise das Erreichen des Abschaltdrehmomentes überwacht. Darüber hinaus ist über das erfindungsgemäße Verfahren eine flexible Einstellung des Abschaltdrehmoments möglich, wobei nahezu jedes Abschaltdrehmoment eingestellt werden kann. Da das erfindungsgemäße Verfahren nicht darauf angewiesen ist, dass das Abschaltdrehmoment durch Betrieb des Elektromotors bis zum Stillstand erreicht wird, sondern es ist eine beliebige Abschaltdrehzahl vorgebbar. Durch das Bestimmen der Drehzahl ist darüber hinaus auf einfache Art und Weise erreichbar, so dass das erfindungsgemäße Verfahren mit geringem vorrichtungstechnischem Aufwand durchführbar ist.

Bei dem erfindungsgemäßen Verfahren kann vorgesehen sein, dass die Effektivspannung mittels einer Pulsweitenmodulation oder einer Phasenanschnittsteuerung geregelt wird. Auf diese Weise kann die Effektivspannung auf sehr einfache Art und Weise und sehr genau vorgegeben werden.

Dabei kann vorgesehen sein, dass der Phasenanschnitt oder die Pulsweitenmodulation variabel einstellbar ist. Dies ermöglicht, dass die Effektivspannung im Betrieb, beispielsweise bei einer schwankenden Netzspannung, konstant gehalten werden kann. Dafür kann beispielsweise eine Steuerung vorgesehen sein, die die Effektivspannung oder die Netzspannung überwacht und den Phasenanschnitt entsprechend nachregelt.

Das erfindungsgemäße Verfahren kann vorsehen, dass die zur Verfügung stehende Netzspannung bestimmt wird und eine Abschaltung des Elektromotors erfolgt, wenn die zur Verfügung stehende Netzspannung zur Bereitstellung der vorgegebenen Effektivspannung nicht ausreicht. Dabei kann vorgesehen sein, dass eine entsprechende Fehlermeldung beispielsweise durch eine Steuerungseinrichtung erzeugt und angezeigt wird. Dies hat den Vorteil, dass ein mittels des erfindungsgemäßen Verfahrens gesteuerter Drehschrauber nur dann in Betrieb genommen wird, wenn das vorbestimmte Abschaltdrehmoment tatsächlich erreicht werden kann.

Auch kann vorgesehen sein, dass im Betrieb des Drehschraubers die somit unter Last am Elektromotor anliegende Effektivspannung bestimmt wird und beim Abweichen der Effektivspannung von der vorgegebenen Effektivspannung die Effektivspannung nachgeregelt wird. Dies erfolgt vorzugsweise über ein Nachsteuern des Phasenanschnitts.

Das erfindungsgemäße Verfahren ermöglicht somit, dass der Drehschrauber mit einer sehr hohen Genauigkeit bei dem vorbestimmten Abschaltdrehmoment abgeschaltet wird, da durch das erfindungsgemäße Verfahren die vorgegebene Effektivspannung mit hoher Genauigkeit eingehalten wird. Somit wird der Elektromotor bei einem erfindungsgemäßen Verfahren mit großer Zuverlässigkeit auf der durch die vorgegebene Effektivspannung gewählten Motorkennlinie betrieben.

Bei einer Ausführungsvariante des erfindungsgemäßen Verfahrens kann vorgesehen sein, dass die maximal durch den Elektromotor erzeugbare Drehzahl begrenzt wird. Dadurch wird vermieden, dass beispielsweise bei einer zu geringen an dem Drehschrauber anliegenden Last der Elektromotor überdreht, wodurch Beschädigungen an dem Elektromotor vermieden werden.

In einem besonders bevorzugten Ausführungsbeispiel des erfindungsgemäßen Verfahrens ist vorgesehen, dass eine das Abschalten des Elektromotors regulierende Abschaltsteuerung nach Anschalten des Elektromotors erst nach einem einmaligen Überschreiten der Abschaltdrehzahl oder nach einer vorgegebenen Zeitspanne aktiviert wird. Da der Elektromotor nach dem Anschalten von dem Stillstand zunächst anfährt, wird der Elektromotor nach dem Anfahren für eine bestimmte Zeitspanne zunächst unterhalb der Abschaltdrehzahl betrieben. Um zu vermeiden, dass die Abschaltsteuerung den Elektromotor bereits während der Anfahrphase abschaltet, wird diese Abschaltsteuerung erst aktiv, wenn die vorgewählte Abschaltdrehzahl einmalig erreicht oder überschritten wird oder nachdem der Motor bereits über eine vorgegebene Zeitspanne betrieben wird, so dass sichergestellt werden kann, dass der Motor die Abschaltdrehzahl überschritten hat. Dadurch kann das erfindungsgemäße Steuerungsverfahren mit hoher Zuverlässigkeit betrieben werden.

Bei dem erfindungsgemäßen Verfahren kann die Drehzahl aus Betriebsdaten des Elektromotors ermittelt werden oder auch direkt gemessen werden. Die Drehzahl kann dabei direkt an der Abtriebswelle des Elektromotors oder auch an einem Abtriebsteil des Drehschraubers bestimmt werden. Dabei ist jedoch zu beachten, dass bei der Bestimmung der Drehzahl an dem Abtriebsteil des Drehschraubers etwaige zwischengeschaltete Getriebeübersetzungen zu berücksichtigen sind.

Bei einem erfindungsgemäßen Drehschrauber mit einem Abtriebsteil und einem einen Elektromotor aufweisenden Antriebsteil, wobei der Elektromotor ein bei gegebener Effektivspannung eindeutiges Verhältnis von Drehzahl zu Drehmoment besitzt und der Antriebsteil eine Steuerungseinrichtung zur Steuerung des Elektromotors aufweist, wobei über die Steuerungseinrichtung eine den Elektromotor antreibende Effektivspannung einstellbar ist, ist vorgesehen, dass eine Drehzahlermittlungsvorrichtung bei Betrieb des Drehschraubers die Drehzahl des Elektromotors ermittelt, über die Steuerungseinrichtung eine Abschaltdrehzahl einstellbar ist und die Drehzahlermittlungsvorrichtung die ermittelte Drehzahl an die Steuerungseinrichtung übermittelt, wobei die Steuerungseinrichtung bei Erreichen der Abschaltdrehzahl den Elektromotor abschaltet.

Der erfindungsgemäße Drehschrauber kann daher in besonders vorteilhafter Weise mittels des erfindungsgemäßen Verfahrens zur Steuerung eines Drehschraubers betrieben werden. Durch die Vorgabe einer Effektivspannung und einer Abschaltdrehzahl lässt sich mit dem erfindungsgemäßen Drehschrauber mit hoher Genauigkeit ein Abschaltdrehmoment bestimmen, bei dem der Drehschrauber im Betrieb abgeschaltet wird. Durch die erfindungsgemäße Steuerungseinrichtung ist der Drehschrauber somit in besonders vorteilhafter Weise und flexibel einsetzbar.

Erfindungsgemäß kann vorgesehen sein, dass die Steuerungseinrichtung zur Einstellung der Effektivspannung eine Phasenanschnittsteuerung oder eine Pulsweitenmodulation aufweist. Eine derartige Steuerung hat sich als besonders effektiv für die Einstellung der Effektivspannung herausgestellt.

Als Elektromotoren können beispielsweise Universalmotoren oder Gleichstrommotoren eingesetzt werden. Derartige Motoren sind in vorteilhafter Weise kommerziell verfügbar und besitzen bei gegebener Effektivspannung ein eindeutiges Verhältnis von Drehzahl zu Drehmoment.

Es kann vorgesehen sein, dass die Steuereinrichtung oder der Abtriebsteil einen Drehzahlbegrenzer aufweist. Wenn der Drehzahlbegrenzer in dem Abtriebsteil angeordnet ist, kann dieser beispielsweise mechanisch ausgeführt sein. In der Steuereinrichtung ist der Drehzahlbegrenzer vorzugsweise elektronisch ausgebildet. Durch das Vorsehen eines Drehzahlbegrenzers wird verhindert, dass der Elektromotor beispielsweise bei zu geringer Last überdreht und somit beschädigt wird.

Nach einem Ausführungsbeispiel der Erfindung ist vorgesehen, dass ein Drehzahlmesser an dem Antriebsteil oder an dem Elektromotor angeordnet ist. Die Drehzahlermittlungsvorrichtung kann einen Drehzahlmesser aufweisen, der beispielsweise ein Impulsgeber sein kann, der magnetisch oder optisch ausgeführt ist oder ein Hall-Sensor. Der Drehzahlmesser kann beispielsweise an dem Elektromotor, dem Antriebsteil oder dem Abtriebsteil angeordnet sein. Selbstverständlich ist es auch möglich, dass die Drehzahl elektronisch in der Steuereinrichtung bestimmt wird.

Im Folgenden wird unter Bezugnahme auf die nachfolgenden Figuren die Erfindung näher erläutert.

Es zeigen:
- Figur 1: eine schematische Seitenansicht eines erfindungsgemäßen Drehschraubers und
- Figur 2: eine schematische Darstellung unterschiedlicher Motorkennlinien eines Elektromotors eines erfindungsgemäßen Drehschraubers.

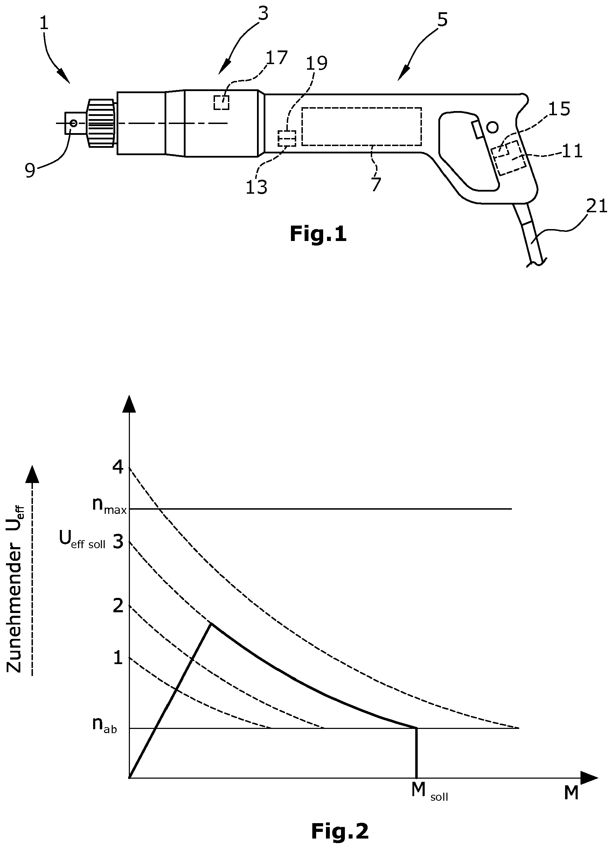

In Fig. 1 ist ein erfindungsgemäßer Drehschrauber 1 schematisch in der Seitenansicht dargestellt. Der Drehschrauber 1 weist einen Abtriebsteil 3 und einen Antriebsteil 5 auf. Der Antriebsteil 5 besitzt einen Elektromotor 7, über den der Abtriebsteil 3 drehend angetrieben werden kann. Der Elektromotor 7 ist in der Fig. 1 lediglich schematisch dargestellt. Der Abtriebsteil 3 kann ein in der Fig. 1 nicht dargestelltes Getriebe aufweisen, über den die von dem Elektromotor 7 erzeugte Drehbewegung übersetzt und an eine Vierkantwelle 9 übertragen wird. Die Vierkantwelle 9 dient zur Aufnahme beispielsweise einer Aufstecknuss, über der der Drehschrauber 1 auf eine nicht dargestellte Schraube aufgesetzt werden kann.

Der Elektromotor 7, der beispielsweise als Gleichstrommotor oder Universalmotor ausgebildet sein kann, weist ein bei gegebener Effektivspannung U_{eff} eindeutiges Verhältnis von Drehzahl n zu Drehmoment M auf. Somit ist bei gegebener Effektivspannung U_{eff} jeder Drehzahl n ein eindeutiges Drehmoment M zugeordnet.

Über eine Steuerungseinrichtung 11 kann der Elektromotor 7 gesteuert werden. Dabei ist an der Steuerungseinrichtung 11 eine den Elektromotor antreibende Effektivspannung U_{eff} als vorgegebene Effektivspannung U_{eff soll} einstellbar. Ferner ist über die Steuerungseinrichtung 11 eine Abschaltdrehzahl n_{ab} einstellbar. Eine Drehzahlermittlungsvorrichtung 13 ermittelt bei Betrieb des Drehschraubers 1 die Drehzahl des Elektromotors 7. Die von der Drehzahlermittlungsvorrichtung 13 ermittelte Drehzahl wird im Betrieb an die Steuerungseinrichtung 11 übermittelt, wobei die Steuerungseinrichtung 11 bei Erreichen der Abschaltdrehzahl n_{ab} den Elektromotor 7 abschaltet. Die Abschaltdrehzahl n_{ab} wird zuvor derart festgelegt, dass bei Erreichen der Abschaltdrehzahl n_{ab} das Abschaltdrehmoment Mₛₒₗₗ von dem Elektromotor 7 erzeugt wird. Das Abschaltdrehmoment Mₛₒₗₗ wird dabei so gewählt, dass mittels der Abtriebsvorrichtung 3 das gewünschte Drehmoment an die Schraube übertragen wird.

Die Steuerungseinrichtung 11 weist eine Phasenanschnittsteuerung 15 zur Einstellung der Effektivspannung U_{eff} auf. Über die Phasenanschnittsteuerung 15 kann die Effektivspannung U_{eff} in vorteilhafter Weise eingestellt werden. Dabei kann die Phasenanschnittsteuerung 15 auch eine Regeleinrichtung aufweisen, über die die vorgegebene Effektivspannung U_{eff soll} auf dem vorgegebenen Wert gehalten wird und somit Schwankungen in der Netzspannung oder Veränderungen der unter Last an dem Elektromotor 7 anliegenden Effektivspannung nachgeregelt werden können.

Der Abtriebsteil 3 kann einen Drehzahlbegrenzer 17 aufweisen, über den die Drehzahl des Elektromotors 7 begrenzt wird. Bei dem gezeigten Ausführungsbeispiel der Erfindung ist der Drehzahlbegrenzer 17 beispielsweise mechanisch ausgebildet. Selbstverständlich besteht auch die Möglichkeit, dass die Steuereinrichtung den Drehzahlbegrenzer aufweist und dieser elektronisch erfolgt. Der Drehzahlbegrenzer kann auch in dem Antriebsteil 5 angeordnet sein.

Die Drehzahlermittlungsvorrichtung 13 kann einen Drehzahlmesser 19, der beispielsweise als magnetischer oder optischer Impulsgeber oder als Hall-Sensor ausgebildet ist, aufweisen.

In dem in Fig. 1 dargestellten Ausführungsbeispiel wird der Drehschrauber 1 über eine Kabelverbindung 21 elektrisch versorgt. Selbstverständlich besteht auch die Möglichkeit, dass der Drehschrauber 1 einen Akkumulator aufweist und somit vom Stromnetz unabhängig ist.

Der erfindungsgemäße Drehschrauber 1 lässt sich in vorteilhafter Weise mittels des erfindungsgemäßen Verfahrens zur Steuerung eines Drehschraubers betreiben.

Zur Erläuterung des erfindungsgemäßen Verfahrens sind in Fig. 2 mehrere Motorkennlinien für unterschiedliche Effektivspannungen U_{eff} dargestellt. Die Motorkennlinien für die einzelnen Effektivspannungen fallen stetig ab, so dass jeder Drehzahl n bei gegebener Effektivspannung U_{eff} eindeutig ein Drehmoment M zugeordnet werden kann. Bei dem Betrieb des erfindungsgemäßen Drehschraubers 1 wird zunächst eine Effektivspannung U_{eff} gegeben, mittels der ein Abschaltdrehmoment Mₛₒₗₗ erreichbar ist. Das Abschaltdrehmoment Mₛₒₗₗ ist dabei ein Drehmoment, mit dem das auf die Schraubverbindung aufzubringende Wunschdrehmoment erreichbar wird. In dem in Fig. 2 dargestellten Ausführungsbeispiel ist die Motorkennlinie, die der vorgegebenen Effektivspannung U_{eff soll} entspricht, die dritte Motorkennlinie. Es wird ferner eine Abschaltdrehzahl n_{ab} vorgegeben, die bei der gegebenen Effektivspannung U_{eff soll} das Abschaltdrehmoment Mₛₒₗₗ erzeugt. Der Elektromotor 7 wird nun mit der vorgegebenen Effektivspannung U_{eff soll} angetrieben. Dabei fährt der Elektromotor 7 zunächst an, bis die Drehzahl n die durch die Effektivspannung vorgegebene Motorkennlinie erreicht. Dabei durchfährt der Elektromotor 7 auch einen Drehzahlbereich, der der Abschaltdrehzahl n_{ab} entspricht. Um zu verhindern, dass der Elektromotor 7 durch die Steuereinrichtung 11 bereits zu diesem Zeitpunkt abgeschaltet wird, kann die Steuereinrichtung 11 eine Abschaltlogik aufweisen, die erst nach einmaligem Erreichen und Überschreiten der Abschaltdrehzahl n_{ab} aktiviert wird. Mit zunehmender Zeitdauer wird der Elektromotor 7 nun auf der ausgewählten Motorkennlinie betrieben. Dabei wird das durch die Last der Schraubverbindung auf den Elektromotor 7 wirkende Drehmoment erhöht, so dass die Drehzahl n abnimmt. Bei dem Betrieb des Drehschraubers 1 wird über die Drehzahlermittlungsvorrichtung 13 dauerhaft die Drehzahl n überwacht. Wird die Abschaltdrehzahl n_{ab} nun erreicht, wird mittels der Steuereinrichtung 11 der Elektromotor 7 abgeschaltet, wobei das Abschaltdrehmoment Mₛₒₗₗ erreicht ist.

Wie aus Fig. 2 hervorgeht, ist ferner eine maximale Drehzahl nₘₐₓ vorgegeben, wobei mittels des Drehzahlbegrenzers 17 die Drehzahl des Elektromotors 7 auf diese Drehzahl begrenzt ist.

Das erfindungsgemäße Verfahren ermöglicht somit eine flexible Einstellung nahezu jedes Abschaltdrehmoments, indem lediglich eine Effektivspannung U_{eff} und eine Abschaltdrehzahl vorgegeben werden müssen. Da durch das erfindungsgemäße Verfahren vermieden werden kann, dass der Elektromotor bis zum Stillstand betrieben wird, so dass er in einen Kurzschlussstrom gerät, wird darüber hinaus Elektromotor 7 geschont, so dass nahezu jeder Gleichstrom oder Universalmotor verwendet werden kann.

## Patentansprüche

1. Verfahren zur Steuerung eines einen Elektromotor (7) aufweisenden Drehschraubers (1), wobei der Elektromotor (7) ein bei gegebener Effektivspannung (U_{eff soll}) eindeutiges Verhältnis von Drehzahl (n) zu Drehmoment (M) aufweist, mit folgenden Schritten:
- Vorgeben einer Effektivspannung (U_{eff soll}) zum Betrieb des Elektromotors (7),
- Vorgeben einer bei der vorgegebenen Effektivspannung (U_{eff soll}) einem vorbestimmten Abschaltdrehmoment (Mₛₒₗₗ) entsprechenden Abschaltdrehzahl (n_{ab}),
- Betreiben des Drehschraubers (1) unter Last mit der vorgegebenen Effektivspannung (U_{eff soll}),
während des Betriebs des Drehschraubers:
- Bestimmen der Drehzahl (n),
- Abschalten des Elektromotors (7) bei Erreichen der Abschaltdrehzahl (n_{ab}).

2. Verfahren nach Anspruch 1, **dadurch gekennzeichnet, dass** die Effektivspannung (U_{eff}) mittels einer Pulsweitenmodulation oder Phasenanschnittsteuerung (15) geregelt wird.

3. Verfahren nach Anspruch 2, **dadurch gekennzeichnet, dass** der Phasenanschnitt oder die Pulsweitenmodulation variabel einstellbar ist.

4. Verfahren nach einem der Ansprüche 1 bis 3, **dadurch gekennzeichnet, dass** im Betrieb die am Elektromotor (7) anliegende Effektivspannung bestimmt wird und bei einem Abweichen der Effektivspannung von der vorgegebenen Effektivspannung (U_{eff soll}) die Effektivspannung nachgeregelt wird.

5. Verfahren nach einem der Ansprüche 1 bis 4, **dadurch gekennzeichnet, dass** die maximal durch den Elektromotor (7) erzeugbare Drehzahl (n) begrenzt wird.

6. Verfahren nach einem der Ansprüche 1 bis 5, **dadurch gekennzeichnet, dass** eine das Abschalten des Elektromotors (7) regulierende Abschaltlogik nach Anschalten des Elektromotors erst nach einmaligem Erreichen oder Überschreiten der Abschaltdrehzahl (n_{ab}) oder nach einer vorgegebenen Zeitspanne aktiviert wird.

7. Verfahren nach einem der Ansprüche 1 bis 6, **dadurch gekennzeichnet, dass** die Drehzahl (n) aus Betriebsdaten des Elektromotors (7) ermittelt oder direkt gemessen wird.

8. Drehschrauber (1) mit einem Abtriebsteil (3) und einem einen Elektromotor (7) aufweisenden Antriebsteil (5), wobei der Elektromotor (7) ein bei gegebener Effektivspannung (U_{eff soll}) eindeutiges Verhältnis von Drehzahl (n) zu Drehmoment (M) besitzt und der Antriebsteil (5) eine Steuerungseinrichtung (11) zur Steuerung des Elektromotors (7) aufweist, wobei über die Steuerungseinrichtung (11) eine den Elektromotor (7) antreibende Effektivspannung (U_{eff}) einstellbar ist,
**dadurch gekennzeichnet, dass**
eine Drehzahlermittlungsvorrichtung (13) bei Betrieb des Drehschraubers (1) die Drehzahl des Elektromotors (7) ermittelt, über die Steuerungseinrichtung (11) eine Abschaltdrehzahl (n_{ab}), die bei einer vorgegebenen Effektivspannung (U_{eff}) einem vorbestimmten Abschaltdrehmoment (Mₛₒₗₗ) entspricht, einstellbar ist und die Drehzahlermittlungsvorrichtung die ermittelte Drehzahl (n) an die Steuerungseinrichtung (11) übermittelt, wobei die Steuerungseinrichtung (11) bei Erreichen der Abschaltdrehzahl (n_{ab}) den Elektromotor (7) abschaltet.

9. Drehschrauber (1) nach Anspruch 8, **dadurch gekennzeichnet, dass** die Steuerungseinrichtung (11) zur Einstellung der Effektivspannung (U_{eff}) eine Phasenanschnittsteuerung (15) oder eine Pulsweitenmodulation aufweist.

10. Drehschrauber (1) nach Anspruch 8 oder 9, **dadurch gekennzeichnet, dass** der Elektromotor (7) ein Universalmotor oder Gleichstrommotor ist.

11. Drehschrauber (1) nach einem der Ansprüche 8 bis 10, **dadurch gekennzeichnet, dass** die Steuerungseinrichtung (11) oder der Abtriebsteil (3) einen Drehzahlbegrenzer (17) aufweist.

12. Drehschrauber (1) nach einem der Ansprüche 8 bis 11, **dadurch gekennzeichnet, dass** die Drehzahlermittlungsvorrichtung (13) einen Drehzahlmesser (19) aufweist.

## Claims

1. A method for controlling a screwdriver (1) having an electric motor (7), the electric motor (7) having a distinct ratio of rotational speed (n) to torque (M) at a given effective voltage (U_{eff soll}), the method comprising the following steps:
- predefining an effective voltage (U_{eff soll}) for the operation of the electric motor (7),
- predefining a cutoff rotational speed (n_{ab}) which corresponds to a predetermined cutoff torque (Mₛₒₗₗ) at the predefined effective voltage (U_{eff soll}),
- operating the screwdriver (1) under load with the predefined effective voltage (U_{eff soll}),
during operation of the screwdriver:
- determining the rotational speed (n),
- switching off the electric motor (7) when reaching the cutoff rotational speed (n_{ab}).

2. The method of claim 1, **characterized in that** the effective voltage (U_{eff}) is regulated by means of pulse width modulation or phase angle control (15).

3. The method of claim 2, **characterized in that** the phase angle or the pulse width modulation can be adjusted in a variable manner.

4. The method of one of claims 1 to 3, **characterized in that**, in operation, the effective voltage present at the electric motor (7) is determined, and the effective voltage is adjusted if the effective voltage deviates from the predefined effective voltage (U_{eff soll}).

5. The method of one of claims 1 to 4, **characterized in that** the maximum rotational speed (n) that the electric motor (7) can generate is limited.

6. The method of one of claims 1 to 5, **characterized in that** after the start of the electric motor, a cutoff logic regulating the switching off of the electric motor (7) is activated only after the cutoff sped (n_{ab}) has been reached or exceeded once or after a predefined period of time.

7. The method of one of claims 1 to 6, **characterized in that** the rotational speed (n) is determined form operational data of the electric motor (7) or is measured directly.

8. A screwdriver (1) with an output portion (3) and a drive portion (5) having an electric motor (7), the electric motor (7) having a distinct ratio of rotational speed (n) to torque (M) at a given effective voltage (U_{eff soll}), and the drive portion (5) having a control means (11) for controlling the electric motor (7), an effective voltage (U_{eff}) driving the electric motor (7) being adjustable by means of the control means (11),
**characterized in that**
a rotational speed detecting device (13) detects the rotational speed of the electromotor (7) during operation of the screwdriver (1), a cutoff rotational speed (n_{ab}) can be set by means of the control means (11), and the rotational speed detecting device transmits the detected rotational speed (n) to the control means (11), with the control means (11) switching off the electric motor (7) when the cutoff rotational speed (n_{ab}) is reached.

9. The screwdriver (1) of claim 8, **characterized in that** the control means (11) comprises a pulse width modulation (15) or phase angle control for adjusting the effective voltage (U_{eff})

10. The screwdriver (1) of claim 8 or 9, **characterized in that** the electric motor (7) is a universal motor or a DC motor.

11. The screwdriver (1) of one of claims 8 to 10, **characterized in that** the control means (11) or the output portion (3) comprises a rotational speed limiter (17).

12. The screwdriver (1) of one of claims 8 to 11, **characterized in that** the rotational speed detecting device (13) comprises a rotational speed counter (19).

## Revendications

1. Procédé destiné à la commande d'une visseuse (1) présentant un moteur électrique (7), le moteur électrique (7) présentant un rapport, qui est explicite pour une tension effective (U_{eff soll}) donnée, entre la vitesse de rotation (n) et le couple de rotation (M), avec les étapes suivantes :
- prescription d'une tension effective (U_{eff soll}) pour le fonctionnement du moteur électrique (7),
- prescription d'une vitesse de rotation de coupure (n_{ab}) correspondant à un couple de rotation de coupure (Mₛₒₗₗ) prédéfini pour la tension effective (U_{eff soll}) prescrite,
- fonctionnement de la visseuse (1) sous charge avec la tension effective (U_{eff soll}) prescrite,
pendant le fonctionnement de la visseuse :
- définition de la vitesse de rotation (n),
- coupure du moteur électrique (7) une fois la vitesse de rotation de coupure (n_{ab}) atteinte.

2. Procédé selon la revendication 1, **caractérisé en ce que** la tension effective (U_{eff}) est régulée au moyen d'une modulation de largeur d'impulsion ou d'une commande à découpage de phase (15).

3. Procédé selon la revendication 2, **caractérisé en ce que** le découpage de phase ou la modulation de largeur d'impulsion peut être réglé(e) de façon variable.

4. Procédé selon l'une des revendications 1 à 3, **caractérisé en ce que**, pendant le fonctionnement, la tension effective aux bornes du moteur électrique (7) est définie et la tension effective est réajustée lors d'une divergence de la tension effective par rapport à la tension effective (U_{eff soll}) prescrite.

5. Procédé selon l'une des revendications 1 à 4, **caractérisé en ce que** la vitesse de rotation (n) maximale, pouvant être produite par le moteur électrique (7), est limitée.

6. Procédé selon l'une des revendications 1 à 5, **caractérisé en ce qu'**une logique de coupure régulant la coupure du moteur électrique (7) n'est activée, après la mise en marche du moteur électrique, qu'après une seule obtention ou un seul dépassement de la vitesse de rotation de coupure (n_{ab}) ou après une période de temps prescrite.

7. Procédé selon l'une des revendications 1 à 6, **caractérisé en ce que** la vitesse de rotation (n) est déterminée à partir de données de fonctionnement du moteur électrique (7), ou mesurée directement.

8. Visseuse (1) avec une partie de sortie (3) et une partie d'entraînement (5) présentant un moteur électrique (7), le moteur électrique (7) possédant un rapport, qui est explicite pour une tension effective (U_{eff soll}) donnée, entre la vitesse de rotation (n) et le couple de rotation (M), et la partie d'entraînement (5) présentant un système de commande (11) destiné à la commande du moteur électrique (7), une tension effective (U_{eff}) entraînant le moteur électrique (7) pouvant être réglée par le biais du système de commande (11),
**caractérisée en ce que**,
lors du fonctionnement de la visseuse (1), un dispositif de détermination de la vitesse de rotation (13) détermine la vitesse de rotation du moteur électrique (7), une vitesse de rotation de coupure (n_{ab}) qui correspond à un couple de coupure (Mₛₒₗₗ) prédéfini pour une tension effective (U_{eff}) prescrite peut être réglée, et le dispositif de détermination de la vitesse de rotation (13) transmet la vitesse de rotation (n) déterminée au système de commande (11), le système de commande (11) coupant le moteur électrique (7) lors de l'obtention de la vitesse de rotation de coupure (n_{ab}).

9. Visseuse (1) selon la revendication 8, **caractérisé en ce que** le système de commande (11) destiné au réglage de la tension effective (U_{eff}) présente une commande à découpage de phase (15) ou une modulation de largeur d'impulsion.

10. Visseuse (1) selon la revendication 8 ou 9, **caractérisé en ce que** le moteur électrique (7) est un moteur universel ou un moteur à courant continu.

11. Visseuse (1) selon l'une des revendications 8 à 10, **caractérisé en ce que** le système de commande (11) ou la partie de sortie (3) présente un limiteur de vitesse de rotation (17).

12. Visseuse (1) selon l'une des revendications 8 à 11, **caractérisé en ce que** le dispositif de détermination de la vitesse de rotation (13) présente un élément de mesure de la vitesse de rotation (19).
